# FASCICULE DE BREVET EUROPEEN

(11) **EP 1 752 697 B1**
(45) Date de publication et mention de la délivrance du brevet: **14.05.2008**
(21) Numéro de dépôt: 06356101.3
(22) Date de dépôt: 09.08.2006
(51) Int. Cl.: F16L 37/23, F16L 37/32, F16L 37/40

(54) **Ensemble de raccord pour circuit fluidique**
Kupplungsanordnung für einen Flüssigkeitskreislauf
Connector assembly for fluidic circuit

(30) Priorité: 10.08.2005 FR 0508492
(43) Date de publication de la demande: 14.02.2007
(73) Titulaire: STAUBLI FAVERGES, 74210 Faverges (FR)
(72) Inventeur: Chappaz, René, 74210 Faverges (FR); Tiberghien, Alain-Christophe, 74320 Sevrier (FR)
(74) Mandataire: Schouller, Jean-Philippe

(56) Documents cités:
- FR-A- 2 247 662
- GB-A- 865 002
- US-A- 2 730 382

## Description

La présente invention concerne un ensemble de raccord pour circuit fluidique.

Au sens de l'invention, un tel circuit fluidique est notamment, mais non exclusivement, un circuit hydraulique de véhicule automobile, en particulier de véhicule de compétition. Le circuit hydraulique précité est, par exemple, un circuit de freinage ou de refroidissement. Cependant, l'invention trouve son application à d'autres types de circuits fluidiques que ceux évoqués ci-dessus, en particulier à ceux équipant les machines d'injection de matière plastique.

L'ensemble de raccord conforme à l'invention autorise le traitement de ces différents types de circuits fluidiques, à savoir notamment leur remplissage en fluide, en particulier en liquide de refroidissement ou de freinage, ou encore leur obturation. Cet ensemble de raccord autorise également la vérification d'au moins une caractéristique relative à ce fluide, en particulier sa pression.

On connaît, par FR-A-2 707 603, un bouchon de sécurité propre à coopérer avec un embout, destiné au remplissage d'un réservoir en fluide sous pression. Ce bouchon comprend un corps, associé à une bague coulissante, permettant la commande radiale de billes de verrouillage.

Cet agencement connu implique cependant certains inconvénients. En effet, ce bouchon se révèle relativement peu commode à monter, dans la mesure où il nécessite à la fois de repousser le corps et de tirer sur la bague de commande.

On connaît également, par FR-A-2 708 078, un coupe-circuit de sécurité pour installation de manutention de fluides sous pression. Ce coupe-circuit comprend deux éléments mâle et femelle, qui sont fixés aux extrémités de deux portions de canalisation, respectivement reliées par exemple à une source de pression et au réservoir d'un véhicule. L'accouplement et le désaccouplement s'opèrent, respectivement, en repoussant et en tirant sur les éléments mâle et femelle précités.

Ce dispositif présente également certains inconvénients. En effet, étant donné qu'il s'agit d'un dispositif de sécurité, destiné à éviter l'arrachage intempestif du tuyau d'alimentation par le véhicule, il implique des efforts de déconnexion élevés, de sorte qu'il ne se prête pas aisément à des manipulations courantes. A cet égard, on notera que, si ce dispositif pouvait être manoeuvré moyennant des efforts réduits, ceci induirait des risques importants de déconnexion accidentelle.

On connaît aussi, par GB 865,002, un ensemble de raccord pour circuit fluidique, comprenant un embout propre à être solidarisé à l'embouchure du circuit, cet embout étant équipé de moyens de réception d'éléments de verrouillage, en particulier de billes, cet ensemble de raccord comprenant également un organe de raccord , propre à coopérer avec ledit embout , cet organe de raccord comportant
un corps,
au moins un logement qui est destiné à la réception des éléments de verrouillage , qui sont mobiles entre une position verrouillée, radialement intérieure en référence à un axe principal de ce corps, et une position déverrouillée, radialement extérieure en référence audit axe,
un tiroir mobile , définissant une paroi axiale du logement , ce tiroir étant mobile entre une position avancée, dans laquelle il confère une dimension axiale restreinte au logement et dans laquelle les éléments de verrouillage sont bloqués, dans leur position verrouillée, par un élément de blocage , ainsi qu'une position retirée,
un organe de commande , pourvu dudit élément de blocage , qui est mobile entre une position active et
des moyens de rappel de l'organe de commande dans sa position relâchée, qui sont intercalés entre des parois en regard appartenant respectivement au corps et à l'organe de commande.

Ceci étant précisé, l'invention vise à proposer un ensemble de raccord, qui comprend un embout ainsi qu'au moins un organe complémentaire, qui peut être monté et démonté, par rapport à cet embout, de façon simple et naturelle pour un opérateur.

A cet effet, l'invention a pour objet un ensemble de raccord pour circuit fluidique, comprenant un embout propre à être solidarisé à l'embouchure dudit circuit, cet embout étant équipé de moyens de réception d'éléments de verrouillage, en particulier de billes, cet ensemble de raccord comprenant également un organe de raccord, propre à coopérer avec ledit embout, cet organe de raccord comportant :
- un corps,
- au moins un logement ménagé dans ce corps, qui est destiné à la réception desdits éléments de verrouillage, qui sont mobiles entre une position verrouillée, radialement intérieure en référence à un axe principal de ce corps, et une position déverrouillée, radialement extérieure en référence audit axe,
- un tiroir mobile, définissant une paroi axiale dudit logement, ce tiroir étant mobile entre une position avancée, dans laquelle il confère une dimension axiale restreinte audit logement et dans laquelle les éléments de verrouillage sont bloqués, dans leur position verrouillée, par un élément de blocage, ainsi qu'une position retirée,
dans laquelle ce tiroir confère une dimension axiale plus importante audit logement,
- un organe de commande, pourvu dudit élément de blocage, qui est mobile entre une position active, dans laquelle il entraîne le tiroir dans sa position avancée, et une position relâchée, dans laquelle il vient en butée contre une extrémité du corps, tournée en service vers l'embout, et
- des moyens de rappel de l'organe de commande dans sa position relâchée, qui sont intercalés entre des parois en regard appartenant respectivement au corps et à l'organe de commande.

Selon d'autres caractéristiques de l'invention :
- les moyens de rappel de l'organe de commande sont des moyens de rappel élastique, et comprennent notamment au moins un ressort ;
- il est en outre prévu des moyens de rappel du tiroir mobile dans sa position avancée ;
- les moyens de rappel du tiroir mobile sont intercalés entre des parois en regard de ce tiroir et de l'organe de commande ;
- les moyens de rappel de l'organe de commande et les moyens de rappel du tiroir mobile sont alignés les uns avec les autres ;
- les moyens de rappel d'organe de commande et les moyens de rappel du tiroir sont de nature élastique, la raideur des moyens de rappel de l'organe de commande étant nettement supérieure à la raideur des moyens de rappel du tiroir mobile ;
- l'organe de commande est pourvu d'une nervure médiane, faisant saillie radialement vers l'intérieur, les moyens de rappel de cet organe de commande étant intercalés entre cette nervure et un épaulement en regard, ménagé sur le corps de l'organe de raccord, alors que les moyens de rappel du tiroir sont intercalés entre cette nervure et le tiroir mobile ;
- l'embout possède un clapet mobile, propre à être déplacé par une partie fixe de l'organe de raccord, alors que l'organe de raccord possède un clapet mobile, propre à être déplacé par une partie fixe de l'embout ;
- lorsque l'embout et l'organe de raccord sont séparés, leur partie fixe et leur clapet mobile respectifs définissent ensemble, respectivement dans l'embout et dans l'organe de raccord, des volumes complémentaires dont des surfaces en regard sont aptes à être en appui surfacique l'une sur l'autre ;
- cet ensemble de raccord comprend en outre un bouchon, propre à coopérer avec ledit embout à la place de l'organe de raccord, ce bouchon comportant :

- un corps, possédant un fond fermé, opposé en service à l'embout,
- au moins un logement ménagé dans ce corps, qui est destiné à la réception des éléments de verrouillage, qui sont mobiles entre une position verrouillée, radialement intérieure à ce logement, et une position déverrouillée, radialement extérieure à ce logement,
- un tiroir mobile, définissant une paroi axiale du logement, ce tiroir étant mobile entre une position avancée, dans lequel il confère une dimension axiale restreinte au logement, et dans laquelle les éléments de verrouillage sont bloqués, dans leur position verrouillée, par un élément de blocage, ainsi qu'une position retirée,
dans laquelle il confère une dimension axiale plus importante au logement,
- un organe de commande, pourvu de l'élément de blocage, qui est mobile entre une position active, dans laquelle il entraîne le tiroir dans sa position avancée, et une position relâchée, dans laquelle il vient en butée contre une extrémités du corps, tournée en service vers l'embout, et
- des moyens de rappel de l'organe de commande dans sa position relâchée, qui sont intercalés entre des parois en regard du corps et du tiroir mobile.

L'invention sera mieux comprise et d'autres avantages de celle-ci apparaîtront plus clairement à la lumière de la description qui va suivre d'un mode de réalisation d'un ensemble de raccord conforme à son principe, donnée uniquement à titre d'exemple non limitatif et faite en référence aux dessins annexés, dans lesquels :
- la figure 1 est une vue de côté, illustrant les différents éléments constitutifs d'un ensemble de raccord conforme à l'invention, représentés de manière isolée les uns des autres;
- la figure 2 illustre la phase d'accouplement d'un embout et d'un organe de raccord, appartenant à l'ensemble de raccord de la figure 1 ;
- la figure 3 est une vue de côté, illustrant l'embout et l'organe de raccord de la figure 2, dans leur position accouplée ; et
- la figure 4 est une vue de côté, illustrant la phase de désaccouplement entre l'embout et l'organe de raccord des figures 2 et 3.

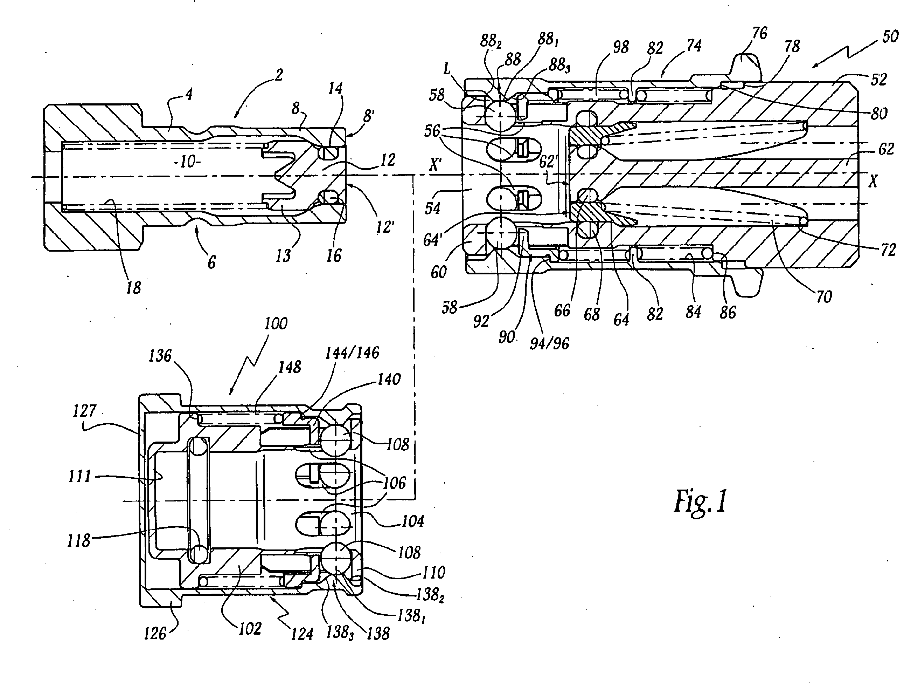

L'ensemble de raccord conforme à l'invention, illustré sur la figure 1, comprend tout d'abord un embout 2, destiné à être solidarisé, par tout moyen approprié, à l'embouchure non représentée d'un circuit fluidique. A titre non limitatif, ce dernier est par exemple un circuit hydraulique de véhicule automobile, notamment de véhicule de compétition, ou encore un circuit de refroidissement d'une machine à injecter ou de cartes électroniques, notamment pour véhicule ferroviaire.

Cet embout 2 comprend un corps cylindrique 4, dans lequel est ménagée une encoche périphérique 6. On notera que les parois d'extrémité 8 du corps 4, situées à droite sur la figure 1, à savoir du côté du raccordement de l'embout, présentent une génératrice extérieure rectiligne, parallèle à l'axe principal de l'embout.

Le corps creux 4 définit un logement traversant 10,
dans lequel est reçu un clapet 12, logé contre les parois d'un col 14, avec interposition d'un joint périphérique 16. De façon connue en soi, ce clapet 12 possède des doigts d'extrémité 13, définissant un passage de fluide dans une position ouverte, comme on le verra plus en détail dans ce qui suit. Enfin, il est prévu un ressort 18, propre à rappeler le clapet 12 contre son siège, à savoir contre les parois du col 14.

On note par ailleurs 8' et 12' les faces frontales respectives du corps 4 et du clapet 12, qui sont tournées en service vers l'organe complémentaire, destiné à coopérer avec l'embout. Dans l'agencement de la figure 1, ces faces avant 8' et 12' sont globalement co-planaires, tout en étant perpendiculaires à l'axe principal de l'embout.

L'ensemble de raccord conforme à l'invention, illustré sur la figure 1, comprend également un organe de raccord, désigné dans son ensemble par la référence 50. Cet organe 50 comprend un corps creux 52, qui reçoit à son extrémité tournée vers l'embout 2 une douille 54, également creuse. Cette douille 54 est percée de différentes lumières allongées 56, le long desquelles sont propres à coulisser des billes de verrouillage 58. Cette douille 54 est pourvue d'une couronne d'extrémité 60, tournée vers l'embout 2, qui fait saillie radialement vers l'extérieur.

L'organe de raccord 50 est pourvu d'une branche centrale 62, s'étendant selon l'axe principal X'-X de cet organe de raccord. A son extrémité tournée vers l'embout 2, cette branche 62 est entourée par un clapet 64, avec interposition d'un joint intérieur 66. Il est par ailleurs prévu un joint extérieur 68, interposé entre ce clapet 64 et la périphérie interne du corps 52.

On note 62' et 64' les faces frontales respectives de la branche 62 et du clapet 64, qui sont tournées vers l'embout 2. Dans l'agencement de la figure 1, ces faces 62' et 64' sont globalement co-planaires, tout en étant perpendiculaires à l'axe principal X'-X de l'organe de raccord 50.

Dans sa position de fermeture illustrée sur cette figure 1, le clapet 64 se trouve en butée contre la douille 54. Il est par ailleurs prévu un ressort 70, dont une première extrémité prend appui contre ce clapet 64 et dont l'autre extrémité repose contre un épaulement 72 du corps 52. Comme on le verra plus en détail dans ce qui suit, ce ressort 70 est propre à rappeler le clapet 64 dans sa position de fermeture, à savoir en butée contre la douille 54.

Une bague de commande 74 est montée, de façon coulissante, à la périphérie extérieure du corps 52. A son extrémité située à droite sur la figure 1, à savoir opposée à l'embout 2, cette bague 74 possède une collerette 76 d'actionnement, faisant saillie radialement vers l'extérieur. Deux épaulements, dont l'un 78 est formé sur le corps 52 et l'autre 80 est formé sur la bague 74, permettent de limiter le mouvement de cette bague 74 par rapport au corps 52. Cette bague est en outre munie d'une nervure périphérique 82, faisant saillie radialement vers l'intérieur, qui reçoit la première extrémité d'un ressort de rappel 84, dont l'autre extrémité est en appui contre un épaulement supplémentaire 86, formé à la périphérie du corps 52.

A l'opposé de la collerette 76, la bague 74 possède un bossage tronconique 88, faisant saillie radialement vers l'intérieur, qui est propre à coopérer avec les billes 58. De façon plus précise, ce bossage 88 possède une plage de blocage 88₁, de part et d'autre de laquelle s'étendent deux rampes latérales inclinées 88₂ et 88₃, respectivement tournée vers l'embout 2 et opposée à celui-ci.

Enfin, l'organe de raccord 50 comporte un tiroir 90, mobile axialement par rapport au corps 52. Ce tiroir cylindrique possède une bordure 92, faisant saillie radialement vers l'intérieur, ainsi qu'un épaulement 94, situé à l'extrémité du tiroir 90 opposée à l'embout 2. Cet épaulement 94 est propre à venir en butée contre un épaulement complémentaire 96, formé en regard sur la bague de commande 74. Cet épaulement 94 reçoit par ailleurs la première extrémité d'un ressort de rappel 98, dont l'autre extrémité vient en appui contre la nervure 82, dont est pourvue la bague 74.

On notera que ce second ressort 98 est moins puissant que le premier ressort 84, comme cela apparaîtra plus clairement lors de la phase d'accouplement décrite ci-après. Il est également à souligner que ces deux ressorts 84 et 98 s'étendent dans le prolongement l'un de l'autre, ce qui est avantageux en termes d'encombrement radial de l'organe de raccord 50.

Enfin, on note L le logement de réception des billes 58, qui est défini par les parois en regard appartenant respectivement à la bordure 92 du tiroir 90, au bossage 88 de la bague 74, ainsi qu'à la couronne 60 de la douille 54. Comme on le verra plus en détail dans ce qui suit, les dimensions axiales de ce logement L sont susceptibles de varier.

L'ensemble de raccord illustré sur la figure 1 comprend également un bouchon 100, susceptible de coopérer avec l'embout 2 à la place de l'organe de raccord 50. Ce bouchon 100 possède une structure globalement analogue à celle de cet organe de raccord 50. De la sorte, les éléments mécaniques de ce bouchon, qui correspondent à ceux de l'organe de raccord, sont affectés des mêmes numéros de référence, augmentés de 50.

Ce bouchon 100 comprend ainsi un corps 102, équipé d'une douille 104 dans laquelle sont ménagées des lumières allongées 106, destinées à la réception de billes de verrouillage 108. Ce corps 102 est en outre pourvu d'une couronne périphérique 110, tournée vers l'embout 2.

Contrairement à l'organe de raccord 50, le corps creux 102 du bouchon 100 possède un fond fermé 111, au voisinage duquel il est prévu un joint torique 118. Le corps 102 est entouré par une bague de commande 124, équipée d'une collerette d'actionnement 126. A la différence de la bague 74, cette bague 124 équipant le bouchon 100 possède également un fond fermé 127, s'étendant au voisinage du fond 111 appartenant au corps 102.

Cette bague 124 est munie d'un bossage 138, possédant une plage de blocage 138₁, ainsi que deux rampes latérales 138₂ et 138₃. Il est par ailleurs prévu un tiroir 140, possédant un épaulement 144 propre à coopérer avec un épaulement complémentaire 146, formé sur la bague 124. Le déplacement de ce tiroir 140 s'effectue à l'encontre d'un ressort de rappel 148, intercalé entre ce tiroir 140 et un épaulement supplémentaire 136, formé sur le corps 102.

L'utilisation de l'ensemble de raccord décrit ci-dessus va maintenant être explicitée, en particulier en ce qui concerne la coopération entre l'embout 2 et l'organe de raccord 50.

En position désaccouplée, comme l'illustre la figure 1, le ressort 18 rappelle le clapet 12 de l'embout 2 dans sa position de fermeture, à savoir contre les parois du col 14. Par ailleurs, le ressort 70, équipant l'organe de raccord 50, rappelle le clapet 64 dans sa position de fermeture, contre la douille 54. Le ressort 84 repousse la bague 74 en direction de l'embout 2, de sorte que la rampe latérale 88₂ du bossage 88 vient en butée contre les parois en regard de la couronne 60. De plus, le ressort 98 rappelle le tiroir 90 contre la bague 74, de sorte que les épaulements respectifs 94 et 96 sont en butée l'un par rapport à l'autre.

Dans ces conditions, le logement L possède des dimensions axiales minimales. Par conséquent, les billes 58 ne disposent sensiblement d'aucune possibilité de débattement axial, de sorte qu'elles sont bloquées par la plage 88₁ du bossage 88. Ces billes 58 se trouvent donc dans leur position radialement retirée.

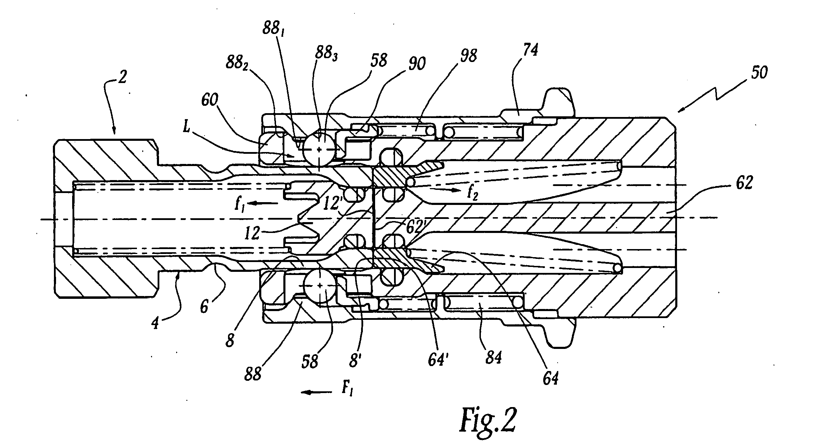

La figure 2 illustre la phase d'accouplement de l'organe de raccord 50 par rapport à l'embout 2. A cet effet, il s'agit de rapprocher cet organe de raccord 50 en direction de cet embout 2, selon la flèche F₁, à savoir vers la gauche de cette figure 2. Cette opération peut être réalisée en poussant, soit sur la bague 74, soit sur le corps 52.

Dans ces conditions, l'extrémité libre 8' du corps 4 de l'embout 2 vient en contact avec les billes de verrouillage 58, de façon à induire leur déplacement à l'opposé de la couronne 60. Ces billes mettent alors en mouvement le tiroir 90, à l'encontre du ressort 98, sans cependant déplacer la bague 74, ainsi que son bossage 88, notamment dans le cas où l'on repousse l'organe de raccord 50 par l'intermédiaire du corps 52. En effet, comme on l'a indiqué ci-dessus, le ressort 84 est plus puissant que le ressort précité 98.

Les billes 58 roulent donc le long de la surface intérieure de la bague, depuis la plage 88₁ vers la rampe 88₃ de ce bossage. Dans ces conditions, les billes se trouvent alors dans leur position radialement sortie, alors que le logement L affecte des dimensions axiales plus importantes que celles qu'il présente dans la position désaccouplée de la figure 1. A cet égard, on soulignera que les billes 58 possèdent deux degrés de liberté par rapport au corps de l'organe de raccord 50, non seulement selon une direction radiale mais encore selon une direction axiale.

Il est alors possible de faire coulisser les parois d'extrémité 8 du corps 4 le long des billes 58, puisque celles-ci se trouvent dans leur position sortie. Puis, le corps 4 de l'embout 2 vient en contact avec le clapet 64 de l'organe de raccord 50, alors que la branche centrale 62 de cet organe 50 vient en contact avec le clapet 12 de l'embout 2. Ceci induit un déplacement de ces deux clapets, à savoir que le clapet 12 se déplace vers la gauche, selon la flèche f₁, alors que le clapet 64 se déplace vers la droite, selon la flèche f₂.

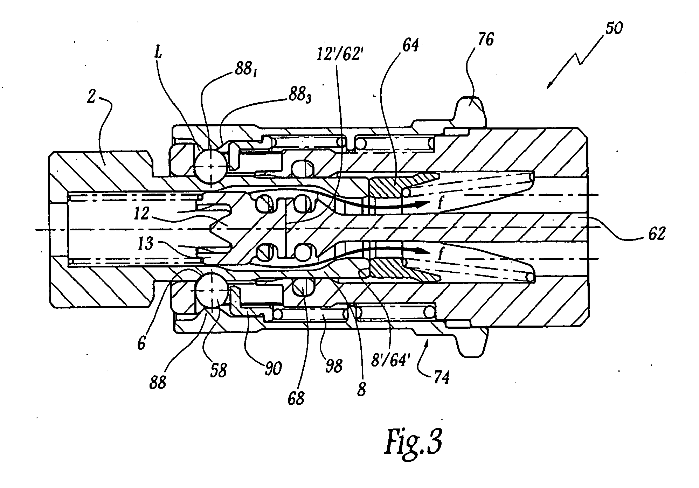

Au terme de ce mouvement de rapprochement de l'organe de raccord 50 par rapport à l'embout 2, comme le montre la figure 3, les billes de verrouillage 58 se trouvent au droit de l'encoche périphérique 6. Le ressort 98, qui rencontre alors une résistance inférieure, est propre à rappeler axialement le tiroir 90 et, par conséquent, ces billes 58. Ces dernières roulent alors le long de la rampe 88₃ du bossage 88, jusqu'à se placer contre la plage 88₁ de ce dernier, ce qui conduit au blocage de ces billes dans l'encoche 6.

L'organe de raccord 50 et l'embout 2 se trouvent alors dans la position accouplée, représentée sur la figure 3. On notera que, dans cet agencement, le logement L possède à nouveau des dimensions axiales minimales, comme dans la configuration désaccouplée de la figure 1. Le passage du fluide est alors possible, selon les flèches f, au travers des doigts 13 ainsi que des espaces intercalaires ménagés entre la branche 62 et les clapets 12 et 64.

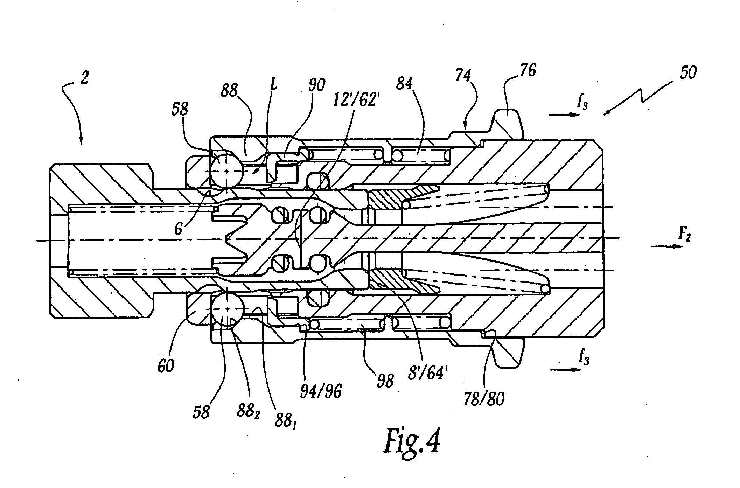

Si l'on désire désaccoupler l'embout 2 et l'organe de raccord 50, il s'agit de tirer manuellement sur la bague de commande 74, au niveau de sa collerette 76, à l'encontre du ressort 84, selon les flèches f₃ à la figure 4.

Ceci induit également le déplacement axial du tiroir 90, à l'opposé de la couronne 60, du fait de la présence des épaulements 94 et 96. Par conséquent, les dimensions axiales du logement L augmentent à nouveau, comme dans la position d'accouplement de la figure 2.

Le bossage 88, appartenant à la bague 74, se trouve également éloigné de la couronne 60, de sorte que les billes 58 ne sont plus bloquées par la plage 88₁. Les parois de l'encoche 6 repoussent alors radialement vers l'extérieur ces billes de verrouillage 58, qui roulent sur la plage 88₁ du bossage, puis sur l'autre rampe 88₂ de ce dernier. A cet égard, on notera que ce mouvement s'opère à l'opposé de celui intervenant lors de l'accouplement, en référence à la figure 2. Les billes 58 affectent alors leur position déverrouillée de la figure 4, à savoir radialement sortie.

En maintenant son action sur la bague de commande 74, l'opérateur fait ensuite coulisser manuellement l'organe de raccord 50 par rapport à l'embout 2, selon la flèche F₂, de sorte qu'au terme de ce mouvement l'organe de raccord 50 et l'embout 2 se trouvent désaccouplés. Il est alors possible de relâcher la traction exercée sur la bague 74, de sorte que cette dernière retrouve sa position de repos, illustrée sur la figure 1, grâce à l'action de rappel du ressort 84.

On notera que, aussi bien durant l'accouplement que le désaccouplement, les faces planes 8' et 12', ainsi que 62' et 64', viennent deux à deux en appui surfacique. Il en est de même pour la partie cylindrique 8, qui s'engage à jeu réduit dans l'alésage ménagé au voisinage du joint 68. Ceci s'avère particulièrement avantageux, car tout emprisonnement de fluide est empêché lors de l'une ou l'autre de ces opérations. Ces surfaces planes et cylindriques, qui définissent des volumes sensiblement complémentaires, évitent la création de tout volume mort propre à générer des égouttures ou des fuites lors des ouvertures et des fermetures successives de l'ensemble de raccord conforme à l'invention.

La coopération entre l'embout 2 et le bouchon 100 s'effectue d'une façon globalement analogue à celle, décrite ci-dessus, intervenant entre l'embout 2 et l'organe de raccord 50.

Ainsi, si l'on désire accoupler l'embout 2 et le bouchon 100, on rapproche ce dernier, de sorte que l'extrémité libre 8' de l'embout 2 repousse axialement les billes 108 et, par conséquent, le tiroir 140 à l'encontre du ressort 148. Dans ces conditions, comme on l'a vu ci-dessus, ces billes 108 se trouvent alors dans leur position de déverrouillage, correspondant à un agencement radialement sorti.

Il est ensuite possible de faire coulisser le bouchon le long du corps 4 de l'embout 2, jusqu'à ce que celui-ci comprime le joint torique 118 puis se trouve au voisinage du fond 111 du bouchon 100. Les billes 108 se trouvent alors au droit de l'encoche 6, de sorte qu'elles y pénètrent sous l'action de rappel du ressort 148, associé à la présence du tiroir 140.

Si l'on désire désaccoupler le bouchon, il s'agit de tirer sur la bague 124, à l'opposé de l'embout 2, de sorte que le bossage 138 ne bloque plus les billes 108. Ces dernières sont alors susceptibles de ressortir de l'encoche 6, de sorte qu'il est possible de faire coulisser le bouchon 100 le long des parois 8 de l'embout 2, jusqu'à le retirer complètement.

L'invention n'est pas limitée à l'exemple décrit et représenté.

Ainsi, dans cet exemple, il est fait mention d'un embout et d'un organe de raccord possédant tous deux un clapet mobile d'obturation. Cependant, à titre de variante, il est possible que seul l'un de ces deux organes mécaniques soit équipé d'un tel clapet.

Il est également envisageable que cet embout et cet organe de raccord soient l'un et l'autre dépourvus de ce clapet d'obturation. Dans cette optique, une fois que l'organe de raccord est accouplé à l'embout, on met en communication cet organe de raccord avec une source d'arrivée de fluide, de manière à admettre ce dernier dans l'embout.

L'invention permet d'atteindre les objectifs précédemment mentionnés.

En effet, le montage et le démontage de l'organe de raccord ou du bouchon, par rapport à l'embout, se révèlent particulièrement commodes pour l'utilisateur. Ainsi, lors du montage, il suffit de rapprocher axialement l'organe de raccord ou le bouchon, selon un mouvement totalement naturel. Le désaccouplement s'accompagne uniquement d'une traction sur la bague de commande de l'organe de raccord ou du bouchon, à savoir une action également naturelle.

La présence de moyens de rappel de la bague, intercalés entre les parois en regard du corps de l'organe de raccord et de cette bague, est également avantageuse, en particulier lors de la phase d'accouplement de l'organe de raccord sur l'embout.

A cet égard, il est à souligner que, lors de l'utilisation de l'ensemble de raccord conforme à l'invention, il peut être avantageux pour l'opérateur de saisir le raccord, non pas au niveau de la bague 74, mais au niveau du corps 52. De la sorte, l'utilisation de l'organe de raccord est plus commode pour l'opérateur, notamment dans la mesure où ce dernier peut placer l'organe de raccord dans la position la plus appropriée, par rapport à la disposition de l'embout.

Dans ces conditions, la présence de ces moyens de rappel maintient la bague de commande dans une position déterminée, en dépit de sa masse qui pourrait la déplacer, de sorte que le bossage 88 qui en est équipé se trouve également dans une position parfaitement définie. En d'autres termes, ces moyens de rappel garantissent que, quelle que soit l'orientation de l'organe de raccord 50, les billes de verrouillage 58 se trouvent maintenues de façon fiable dans l'encoche 6, par l'intermédiaire du bossage 88.

A cet égard, on notera que la fiabilité de ce verrouillage n'est pas nécessairement assurée, si les deux ressorts 84 et 98 sont remplacés par un unique ressort, s'étendant entre l'épaulement 86 et le tiroir 90. En effet, dans cette configuration, lorsque l'embout 2 repousse les billes 58 et le tiroir 90, lors de l'accouplement, la bague 74 ne se trouve alors plus soumise à l'action de ce ressort unique. Dans ces conditions, elle est susceptible de se déplacer axialement de façon intempestive, en particulier lorsqu'elle se trouve soumise à l'action de la gravité. On conçoit qu'un tel déplacement intempestif est susceptible d'affecter la qualité des manoeuvres opérées sur cet organe de raccord. On soulignera en outre que l'ensemble de raccord conforme à l'invention n'est pas sujet à des désaccouplements intempestifs, notamment lors d'une traction sur le corps 52 de l'organe de raccord 50. Ceci est à comparer avec l'enseignement de FR-A-2 708 078, pour lequel de tels désaccouplements sont susceptibles de survenir.

L'ensemble de raccord conforme à l'invention se révèle tout particulièrement adapté pour des implantations délicates et peu accessibles, par exemple pour des refroidissements de cartes électroniques ou lorsque l'embout se trouve fixé au fond d'un puits dont l'accessibilité est réduite. En effet, il est possible de manoeuvrer l'organe de raccord ou le bouchon, même lorsque l'embout est placé au-dessous du débouché de ce puits.

## Revendications

1. Ensemble de raccord pour circuit fluidique, comprenant un embout (2) propre à être solidarisé à l'embouchure dudit circuit, cet embout (2) étant équipé de moyens (6) de réception d'éléments de verrouillage, en particulier de billes (58, 108), cet ensemble de raccord comprenant également un organe de raccord (50), propre à coopérer avec ledit embout (2), cet organe de raccord (50) comportant :
- un corps (52),
- au moins un logement (L) ménagé dans ce corps (52), qui est destiné à la réception desdits éléments de verrouillage (58), qui sont mobiles entre une position verrouillée, radialement intérieure en référence à un axe principal (X'-X) de ce corps, et une position déverrouillée, radialement extérieure en référence audit axe,
- un tiroir mobile (90), définissant une paroi axiale dudit logement (L), ce tiroir étant mobile entre une position avancée, dans laquelle il confère une dimension axiale restreinte audit logement et dans laquelle les éléments de verrouillage (58) sont bloqués, dans leur position verrouillée, par un élément de blocage (88), ainsi qu'une position retirée, dans laquelle ce tiroir confère une dimension axiale plus importante audit logement,
- un organe de commande (74), pourvu dudit élément de blocage (88), qui est mobile entre une position active, dans laquelle il entraîne le tiroir dans sa position avancée, et une position relâchée, dans laquelle il vient en butée contre une extrémité (60) du corps (52), tournée en service vers l'embout (2), et
- des moyens (84) de rappel de l'organe de commande (74) dans sa position relâchée, qui sont intercalés entre des parois en regard (86, 82) appartenant respectivement au corps (52) et à l'organe de commande (74).

2. Ensemble de raccord selon la revendication 1, **caractérisé en ce que** les moyens (84) de rappel de l'organe de commande (74) sont des moyens de rappel élastique, et comprennent notamment au moins un ressort.

3. Ensemble de raccord selon la revendication 1 ou 2, **caractérisé en ce qu'**il est en outre prévu des moyens (98) de rappel du tiroir mobile (90) dans sa position avancée.

4. Ensemble de raccord selon la revendication 3, **caractérisé en ce que** les moyens (98) de rappel du tiroir mobile (90) sont intercalés entre des parois en regard de ce tiroir et de l'organe de commande (74).

5. Ensemble de raccord selon la revendication 4, **caractérisé en ce que** les moyens (84) de rappel de l'organe de commande (74) et les moyens (98) de rappel du tiroir mobile (90) sont alignés les uns avec les autres.

6. Ensemble de raccord selon la revendication 5, **caractérisé en ce que** les moyens (84) de rappel d'organe de commande (74) et les moyens (98) de rappel du tiroir (90) sont de nature élastique, la raideur des moyens (84) de rappel de l'organe de commande (74) étant nettement supérieure à la raideur des moyens (98) de rappel du tiroir mobile (90).

7. Ensemble de raccord selon la revendication 6, **caractérisé en ce que** l'organe de commande (74) est pourvu d'une nervure médiane (82), faisant saillie radialement vers l'intérieur, les moyens (84) de rappel de cet organe de commande (74) étant intercalés entre cette nervure (82) et un épaulement (86) en regard, ménagé sur le corps (52) de l'organe de raccord (50), alors que les moyens (98) de rappel du tiroir (90) sont intercalés entre cette nervure (82) et le tiroir mobile (90).

8. Ensemble de raccord selon l'une quelconque des revendications précédentes, **caractérisé en ce que** l'embout (2) possède un clapet mobile (12), propre à être déplacé par une partie fixe (62) de l'organe de raccord (50), alors que l'organe de raccord (50) possède un clapet mobile (64), propre à être déplacé par une partie fixe (8) de l'embout (2).

9. Ensemble de raccord selon la revendication 8, **caractérisé en ce que**, lorsque l'embout (2) et l'organe de raccord (50) sont séparés, leur partie fixe (8, 62) et leur clapet mobile (12, 64) respectifs définissent ensemble, respectivement dans l'embout (2) et dans l'organe de raccord (52), des volumes complémentaires dont des surfaces en regard (8', 12', 62', 64') sont aptes à être en appui surfacique l'une sur l'autre.

10. Ensemble de raccord selon l'une quelconque des revendications précédentes, **caractérisé en ce que** cet ensemble de raccord comprend en outre un bouchon (100), propre à coopérer avec ledit embout (2) à la place de l'organe de raccord (50), ce bouchon (100) comportant :
- un corps (102), possédant un fond fermé (111), opposé en service à l'embout (2),
- au moins un logement ménagé dans ce corps, qui est destiné à la réception des éléments de verrouillage (108), qui sont mobiles entre une position verrouillée, radialement intérieure à ce logement, et une position déverrouillée, radialement extérieure à ce logement,
- un tiroir mobile (140), définissant une paroi axiale du logement, ce tiroir étant mobile entre une position avancée, dans lequel il confère une dimension axiale restreinte au logement, et dans laquelle les éléments de verrouillage (108) sont bloqués, dans leur position verrouillée, par un élément de blocage (138), ainsi qu'une position retirée, dans laquelle il confère une dimension axiale plus importante au logement,
- un organe de commande (124), pourvu de l'élément de blocage (138), qui est mobile entre une position active, dans laquelle il entraîne le tiroir dans sa position avancée, et une position relâchée, dans laquelle il vient en butée contre une extrémité (110) du corps (102), tournée en service vers l'embout (2), et
- des moyens (148) de rappel de l'organe de commande (124) dans sa position relâchée, qui sont intercalés entre des parois en regard du corps (102) et du tiroir mobile (140).

## Claims

1. A connecting assembly for a fluid circuit, comprising an end piece (2) capable of being interlocked with the mouth of said circuit, this end piece (2) being fitted with means (6) for receiving locking elements, in particular balls (58, 108), this connecting assembly also comprising a connecting member (50), suitable for cooperating with said end piece (2), this connecting member (50) comprising:
- a body (52),
- at least one receptacle (L) formed in this body (52), which is intended to receive said locking elements (58), which move between a locked position, which is radially internal with reference to a main axis (X'-X) of this body, and an unlocked position, which is radially external with reference to said axis,
- a mobile slide (90), defining an axial wall of said receptacle (L), this slide being mobile between a forward position, in which it imparts a restricted axial dimension to said receptacle and in which the locking elements (58) are blocked, in their locked position, by a blocking element (88), and a retracted position, in which this slide imparts a larger axial dimension to said receptacle,
- a control member (74), provided with said blocking element (88), which is mobile between an active position, in which it draws the slide into its forward position, and a relaxed position, in which it butts against one end (60) of the body (52), which is turned in operation towards the end piece (2), and
- means (84) for returning the control member (74) to its relaxed position, which are inserted between facing walls (86, 82) belonging respectively to the body (52) and to the control member (74).

2. A connecting assembly according to Claim 1, **characterised in that** the means (84) for returning the control member (74) are elastic return means, and comprise in particular at least one spring.

3. A connecting assembly according to Claim 1 or 2, **characterised in that** furthermore means (98) for returning the mobile slide (90) to its forward position are provided.

4. A connecting assembly according to Claim 3, **characterised in that** the means (98) for returning the mobile slide (90) are inserted between facing walls of this slide and of the control member (74).

5. A connecting assembly according to Claim 4, **characterised in that** the means (84) for returning the control member (74) and the means (98) for returning the mobile slide (90) are aligned with each other.

6. A connecting assembly according to Claim 5, **characterised in that** the means (84) for returning the control member (74) and the means (98) for returning the slide (90) are elastic in nature, the rigidity of the means (84) for returning the control member (74) being distinctly greater than the rigidity of the means (98) for returning the mobile slide (90).

7. A connecting assembly according to Claim 6, **characterised in that** the control member (74) is provided with a median rib (82), protruding radially towards the inside, the means (84) for returning this control member (74) being inserted between this rib (82) and a facing shoulder (86), formed on the body (52) of the connecting member (50), whereas the means (98) for returning the slide (90) are inserted between this rib (82) and the mobile slide (90).

8. A connecting assembly according to any one of the preceding claims, **characterised in that** the end piece (2) has a mobile valve (12), suitable for being displaced by a fixed part (62) of the connecting member (50), whereas the connecting member (50) has a mobile valve (64), suitable for being displaced by a fixed part (8) of the end piece (2).

9. A connecting assembly according to Claim 8, **characterised in that**, when the end piece (2) and the connecting member (50) are separated, their respective fixed parts (8, 62) and mobile valves (12, 64) together define, in the end piece (2) and in the connecting member (52) respectively, complementary volumes, facing surfaces (8', 12', 62', 64') of which are capable of bearing on the surfaces of one another.

10. A connecting assembly according to any one of the preceding claims, **characterised in that** this connecting assembly furthermore comprises a stopper (100) suitable for cooperating with said end piece (2) instead of the connecting member (50), this stopper (100) comprising:
- a body (102), having a closed base (111), which is opposed in operation to the end piece (2),
- at least one receptacle formed in this body, which is intended to receive the locking elements (108), which are mobile between a locked position, which is radially internal to this receptacle, and an unlocked position, which is radially external to this receptacle,
- a mobile slide (140), defining an axial wall of the receptacle, this slide being mobile between a forward position, in which it imparts a restricted axial dimension to the receptacle and in which the locking elements (108) are blocked, in their locked position, by a blocking element (138), and a retracted position, in which it imparts a larger axial dimension to the receptacle,
- a control member (124), provided with the blocking element (138), which is mobile between an active position, in which it draws the slide into its forward position, and a relaxed position, in which it butts against one end (110) of the body (102), which is turned in operation towards the end piece (2), and
- means (148) for returning the control member (124) to its relaxed position, which are inserted between walls facing the body (102) and the mobile slide (140).

## Patentansprüche

1. Kupplungsanordnung für einen Fluidkreis einen Ansatz (2) umfassend, der geeignet ist, mit der Mündung des Kreises verbunden zu werden, wobei dieser Ansatz (2) mit Mitteln (6) zur Aufnahme von Verriegelungselementen, insbesondere von Kugeln (58, 108) ausgerüstet ist, wobei die Kupplungsanordnung auch ein Kupplungsorgan (50) umfasst, das geeignet ist, mit dem Ansatz (2) zusammenzuarbeiten, wobei das Kupplungsorgan (50) umfasst:
- einen Körper (52),
- mindestens einen Aufnahmeraum (L), der in den Körper (52) eingearbeitet ist und der zur Aufnahme der Verriegelungselemente (58) dient, die zwischen einer in Bezug auf eine Hauptachse (X'-X) dieses Körpers radial innen liegenden Verriegelungsposition und einer in Bezug auf die Achse radial außen liegenden Entriegelungsposition beweglich sind,
- ein bewegliches Schubelement (90), das eine axiale Wand des Aufnahmeraums (L) definiert, wobei das Schubelement zwischen einer vorgerückten Stellung, in der es dem Aufnahmeraum eine begrenzte axiale Dimension mitteilt und in der die Verriegelungselemente (58) in ihrer Verriegelungsposition durch ein Blockierelement (88) blockiert sind, sowie einer zurückgezogenen Stellung beweglich ist, in der dieses Schubelement dem Aufnahmeraum eine größere axiale Dimension mitteilt,
- ein mit dem Blockierelement (88) versehenes Steuerorgan (74), das zwischen einer aktiven Stellung, in der es das Schubelement in seine vorgerückte Stellung mitnimmt, und einer gelösten Stellung beweglich ist, in der es in Anschlag gegen ein Ende (60) des Körpers (52) kommt, das im Betrieb zum Ansatz (2) gerichtet ist, und
- Mittel (84) zum Rückstellen des Steuerorgans (74) in seine gelöste Stellung, die zwischen gegenüberstehenden Wänden (86, 82) angeordnet sind, die jeweils zum Körper (52) und zum Steuerorgan (74) gehören.

2. Kupplungsanordnung nach Anspruch 1, **dadurch gekennzeichnet, dass** die Rückstellmittel (84) des Steuerorgans (74) elastische Rückstellmittel sind und insbesondere mindestens eine Feder umfassen.

3. Kupplungsanordnung nach Anspruch 1 oder Anspruch 2, **dadurch gekennzeichnet, dass** außerdem Mittel (98) zum Rückstellen des beweglichen Schubelements (90) in seine vorgerückte Position vorgesehen sind.

4. Kupplungsanordnung nach Anspruch 3, **dadurch gekennzeichnet, dass** die Rückstellmittel (98) des beweglichen Schubelements (90) zwischen gegenüberstehenden Wänden dieses Schubelements und des Steuerorgans (74) angeordnet sind.

5. Kupplungsanordnung nach Anspruch 4, **dadurch gekennzeichnet, dass** die Rückstellmittel (84) des Steuerorgans (74) und die Rückstellmittel (98) des beweglichen Schubelements (90) fluchtend zueinander ausgerichtet sind.

6. Kupplungsanordnung nach Anspruch 5, **dadurch gekennzeichnet, dass** die Rückstellmittel (84) des Steuerorgans (71) und die Rückstellmittel (98) des Schubelements (90) von elastischer Natur sind, wobei die Steifigkeit der Rückstellmittel (84) des Steuerorgans (74) deutlich größer als die Steifigkeit der Rückstellmittel (98) des beweglichen Schubelements (90) ist.

7. Kupplungsanordnung nach Anspruch 6, **dadurch gekennzeichnet, dass** das Steuerorgan (74) mit einem Mittelsteg (82) versehen ist, der radial nach innen vorspringt, wobei die Rückstellmittel (84) dieses Steuerorgans (74) zwischen diesem Steg (82) und einer gegenüberstehenden Schulter (86) angeordnet sind, die an dem Körper (52) des Kupplungsorgans (5) angebracht ist, während die Rückstellmittel (98) des Schubelements (90) zwischen diesem Steg (82) und dem beweglichen Schubelement (90) angeordnet sind.

8. Kupplungsanordnung nach einem beliebigen der vorhergehenden Ansprüche, **dadurch gekennzeichnet, dass** der Ansatz (2) ein bewegliches Ventil (12) besitzt, das geeignet ist, durch ein feststehendes Teil (62) des Kupplungsorgans (50) verschoben zu werden, während das Kupplungsorgan (50) ein bewegliche Ventil (64) besitzt, das geeignet ist, durch ein feststehendes Teil (8) des Ansatzes (2) verschoben zu werden.

9. Kupplungsanordnung nach Anspruch 8, **dadurch gekennzeichnet, dass**, wenn der Ansatz (2) und das Kupplungsorgan (50) getrennt sind, jeweils ihr feststehendes Teil (8, 62) und ihr bewegliches Ventil (12, 64) zusammen jeweils in dem Ansatz (2) und in dem Kupplungsorgan (52) komplementäre Volumen definieren, deren gegenüberstehende Flächen (8', 12', 62', 64') geeignet sind, in Flächenabstützung miteinander zu sein.

10. Kupplungsanordnung nach einem beliebigen der vorhergehenden Ansprüche, **dadurch gekennzeichnet, dass** diese Kupplungsanordnung außerdem einen Stopfen (100) umfasst, der geeignet ist, mit dem Ansatz (2) anstelle des Kupplungsorgans (50) zusammenzuarbeiten, wobei dieser Stopfen umfasst:
- einen Körper, der einen geschlossenen Boden (111) umfasst, der im Betrieb entgegengesetzt zum Ansatz (2) liegt,
- mindestens einen in diesen Körper eingearbeiteten Aufnahmeraum, der zur Aufnahme von Verriegelungselementen (108) dient, die zwischen einer Verriegelungsstellung, radial innen liegend zu diesem Aufnahmeraum, und einer radial außen zu diesem Aufnahmeraum liegenden Entriegelungsstellung beweglich sind,
- ein Schubelement (140), das eine axiale Wand des Aufnahmeraums definiert, wobei dieses Schubelement zwischen einer vorgerückten Stellung, in der es dem Aufnahmeraum eine begrenzte axiale Dimension mitteilt und in der die Verriegelungselemente (108) in ihrer Verriegelungsposition durch ein Blockierelement (138) blockiert sind, sowie einer zurückgezogenen Stellung beweglich ist, in der dieses Schubelement dem Aufnahmeraum eine größere axiale Dimension mitteilt,
- ein mit dem Blockierelement (138) versehenes Steuerorgan (124), das zwischen einer aktiven Stellung, in der es das Schubelement in seine vorgerückte Stellung mitnimmt, und einer gelösten Stellung beweglich ist, in der es in Anschlag gegen ein Ende (110) des Körpers (102) kommt, das im Betrieb zum Ansatz (2) gerichtet ist, und
- Mittel (148) zum Rückstellen des Steuerorgans (124) in seine gelöste Stellung, die zwischen gegenüberstehenden Wänden des Körpers (102) und des Schubelements (140) angeordnet sind.
